# EUROPÄISCHE PATENTANMELDUNG

(11) **EP 1 032 227 A1**
(43) Veröffentlichungstag der Anmeldung: **30.08.2000**
(21) Anmeldenummer: 99103363.0
(22) Anmeldetag: 22.02.1999
(51) Int. Cl.: H04Q 7/26, H04Q 7/20, H04Q 7/32, H04M 3/42, H04M 1/60

(54) **Vorrichtung und Verfahren zum Umsetzen einer Telekommunikations-Mobilfunkverbindung in ein Telefon-Festnetz**

(71) Anmelder: CoM.s.a.t.AG, Kommunikationssysteme, 68259 Mannheim (DE)
(72) Erfinder: Mohr, Dieter, 68259 Mannheim (DE)
(74) Vertreter: Mierswa, Klaus, Dipl.-Ing.

(57) **Zusammenfassung**

Die Erfindung betrifft eine Vorrichtung (1, 1') sowie ein Verfahren zum Umsetzen einer Telekommunikations-Mobilfunkverbindung in ein Telefon-Festnetz (16), wobei die Vorrichtung einerseits eine Sende- und Empfangseinheit (2) zur Herstellung einer Mobilfunkverbindung mit einem Funktelefon (14) aufweist und als Funktelefon fungiert sowie andererseits eine Schnittstelle (10, 10') zum Anschluß an einen Nebenstellenanschluß (9, 9', 9") einer Telefonanlage (11) aufweist und als Nebenstelle fungiert. Durch Aktivierung einer Gabelschaltung (7) der Vorrichtung (1, 1') wird der Sprachkanal (18) der Vorrichtung mit dem Sprachkanal der Festnetz-Telefonanlage (11) verbunden, so daß ausgehend von der Telefonanlage (11), eine Festnetz-Telefonverbindung durch Nachwahl einer Amtskennziffer und der einen Festnetz-Teilnehmer (17) entsprechenden Rufnummer bzw. eines Kurzwahlcodes am Funktelefon (14) oder innerhalb der Telefonanlage (11) eine Festnetz-Telefonverbindung durch Nachwahl der einer weiteren Nebenstelle (13) entsprechenden Rufnummer am Funktelefon (14) hergestellt wird.

## Beschreibung

### Technisches Gebiet:

Die Erfindung betrifft eine Vorrichtung sowie ein Verfahren zum Umsetzen einer Telekommunikations-Mobilfunkverbindung in ein Telefon-Festnetz.

### Stand der Technik:

Im Bereich der Telekommunikation kommen gegenwärtig zwei verschiedene Netztypen zur Vermittlung und Telekommunikationsverbindungen (Übertragung von Daten) zum Einsatz. Neben dem Telefon-Festnetz, bestehend aus einer Vielzahl von ortsfest verlegten Leitungskabeln und stationären Vermittlungsstellen, findet Telekommunikation zunehmend über Mobilfunknetze statt. Zur Kommunikation über ein Mobilfunknetz ist keine stationäre Telefonanlage mit festem Anschluß an das terrestrische Telefonnetz notwendig, sondern Kommunikationsverbindungen werden von mobilen Endgeräten, z.B. Funktelefonen, über eine oder mehrere Funkumsetzer aufgebaut, wobei die Datenübertragung ortsungebunden auf elektromagnetischem Wege erfolgt.

Die Tarifierung der Kommunikationsverbindungen ist stark unterschiedlich und richtet sich je nach Netzanbieter nach der Tageszeit, nach dem räumlichen Abstand der beiden Telekommunikationsteilnehmer (z.B. Ortsnetz- oder Fernverbindungen) sowie nach der Art der verwendeten Kommunikationsverbindung, d.h. ob die Verbindung innerhalb des Festnetzes, innerhalb des Mobilfunknetzes oder unter Übergang von einer in die andere Netzklasse aufgebaut wurde. Gegenwärtig liegen stark unterschiedliche Tarife vor, wobei die Kosten für Fernverbindungen über das terrestrische Festnetz im Schnitt tagsüber weit über den Kosten für Mobilfunkverbindungen, deren Tarifierung ortsunabhängig ist, liegen, welche wiederum die Kosten für die Nutzung des Telefonortsnetzes weit übersteigen. Beim Übergang vom Mobilfunknetz in das Festnetz entstehen zusätzliche Kosten, da die Netzanbieter für das Umsetzen einer Verbindung in ein anderseitiges Netz, ggf. von der Konkurrenz betrieben, Gebühren verlangen.

Durch die DE 195 01 468 A1 ist ein Kommunikationssystem mit schnurgebundenen und/oder schnurlosen Endgeräten und einem Vermittlungssystem zur Herstellung von Verbindungen zwischen den Endgeräten bekannt geworden. Dabei werden dem Vermittlungssystem Spachverarbeitungsmittel zur Erkennung von Sprachsignalen eines Benutzers eines der Endgeräte und Steuermittel zur Aktivierung mindestens eines Leistungsmerkmals für das benutzte Endgerät in Abhängigkeit von den von den Sprachverarbeitunmgsmitteln erkannten Sprachsignalen zugeordnet.

Durch die Literaturstelle "Schnurlos und frei- der neue Büroalltag" in Funkschau 7/1990, Seite 44-46, ist eine schnurlose TK-Anlage bekannt geworden, die in eine Nebenstellenanlage integriert ist, und zwar für zwei Amtsleitungen, vier kabelgebundene Apparate sowie vier Schnurlostelefone.

Des Weiteren ist durch die DE 34 18 459 A1 ein Verfahren zur Identifizierung von Benutzern eines Fernsprechapparates bekannt geworden, bei dem der Fernsprechapparat eine Codiereinrichtung enthält, die mit einem dem Benutzer überlassenen Schlüssel aktiviert wird und nach dem Abheben des Handapparates in Abhängigkeit der Codierung des Schlüssels ein besonderes Benutzerkennzeichen erzeugt, welches über die Anschlußleitung zur Fernsprechvermittlungsanlage gesendet wird, um zusammen mit den Daten der jeweiligen Gesprächsverbindung gespeichert zu werden. So kann eine zentrale Gesprächsdatenerfassung personenbezogen durchgeführt werden, um mehrere einen Fernsprechapparat benutzende Personen voneinander zu unterscheiden.

Durch die US005617470A ist eine ähnliche Vorrichtung bekannt geworden, die verhindert, dass unauthorisierte Personen Zugang zu einem Telefonservice haben. Die Vorrichtung arbeitet mit einem Zugangscode, der einen festen Bestandteil aufweist, der einen authorisierten Benutzer identifiziert. Eine Mehrzahl von variablen Komponenten des Zugangscodes sind der festen Komponente zugeordnet, wobei wenigstens eine der variablen Komponenten momentan für den Zweck eines Telefonanrufs durch einen Service gültig ist. Die variable Komponente wird nach jedem Telefonanruf in einer vorgegebenen Sequenz innerhalb der Vielzahl der variablen Komponenten geändert. Mittels Kreditkarte kann die Vielzahl der variablen Komponenten in vorgegebener Sequenz gespeichert werden, auf der auch die Anzahl der durchgeführten Telefongespräche gespeichert wird, um dem Telefonservice eine Zuordnung der gültigen momentanen variablen Komponente zum nächsten Telefongespräch zu ermöglichen.

### Technische Aufgabe:

Der Erfindung liegt die Aufgabe zugrunde, Gebührenunterschiede bei der Tarifierung der unterschiedlichen Verbindungstypen wirtschaftlich nutzbar zu machen und eine Möglichkeit zum preisgünstigeren Telefonieren zur Verfügung zu stellen.

Offenbarung der Erfindung und deren Vorteile:
Die Lösung der Aufgabe erfolgt erfindungsgemäß durch eine Vorrichtung zum Umsetzen einer Telekommunikations-Mobilfunkverbindung in ein Telefon-Festnetz, mit folgenden Merkmalen:
a) eine Sende- und Empfangseinheit zur Herstellung einer Mobilfunkverbindung mit einem Funktelefon über ein Mobilfunknetz, wobei die Vorrichtung durch die Sende- und Empfangseinheit Teilnehmer am Mobilfunknetz ist;
b) eine Festnetz-Schnittstelle zum Anschluß an einen Nebenstellenanschluß einer Telefonanlage, wobei über die Festnetz-Schnittstelle eine Festnetz-Verbindung zu einer weiteren Nebenstelle der Telefonanlage oder über die Amtsleitung zu einer weiteren Festnetz-Telefonanlage herstellbar ist,
c) wobei ein Anruf, der aus dem Mobilfunknetz an der Sende- und Empfangseinheit ankommt, einer Steuereinheit signalisiert wird, die eine Gabelschaltung aktiviert, welche die Vorrichtung für den ankommenden Anruf transparent schaltet, wobei die von der Sende- und Empfangseinheit empfangene Sprachinformation über die Festnetz-Schnittstelle dem Sprachkanal der Telefonanlage zugeführt wird.

Bei aktivierter Gabelschaltung entsprechen dann Eingaben am Funktelefon Eingaben an einer herkömmlichen Nebenstelle der Telefonanlage, so daß eine Festnetz-Verbindung zu einer weiteren Nebenstelle der Telefonanlage oder über die Amtsleitung zu einer weiteren Festnetz-Telefonanlage herstellbar ist.

Die Lösung der Aufgabe ist verfahrensmäßig dadurch bestimmt, daß
a) von einem Funktelefon über das Mobilfunknetz eine Vorrichtung, die eine Sende- und Empfangseinheit aufweist, durch welche die Vorrichtung Teilnehmer am Mobilfunknetz ist, angewählt und eine Mobilfunkverbindung hergestellt wird,
b) die Vorrichtung als Nebenstelle an eine Festnetz-Telefonanlage angeschlossen ist,
c) durch Aktivierung einer Gabelschaltung der Vorrichtung der Sprachkanal der Vorrichtung mit dem Sprachkanal der Festnetz-Telefonanlage verbunden wird,
d1) ausgehend von der Telefonanlage, eine Festnetz-Telefonverbindung durch Nachwahl einer Amtskennziffer und der entsprechenden Rufnummer bzw. eines Kurzwahlcodes am Funktelefon hergestellt wird
   oder
d2) innerhalb der Telefonanlage eine Festnetz-Telefonverbindung durch Nachwahl der einer weiteren Nebenstelle entsprechenden Rufnummer am Funktelefon hergestellt wird.

Die erfindungsgemäße Vorrichtung wird einerseits als Nebenstelle einer Telefonanlage verwendet, von der aus in bekannter Weise interne Verbindungen zu anderen Nebenstellen derselben Telefonanlage hergestellt werden können oder aber durch Anwahl der Amtsleitung, z.B. mittels einer Amtskennziffer, Telefonverbindungen mit anderen stationären, ggf. auch mobilen, Endgeräten herstellbar sind.

Auf der anderen Seite fungiert die erfindungsgemäße Vorrichtung als Funktelefon, ist also, obwohl es sich um ein ortsfest installiertes Gerät handelt, direkter Teilnehmer am Mobilfunknetz. Die Vorrichtung stellt damit ein als private Vermittlungsstelle arbeitendes Bindeglied zwischen dem terrestrischen Netz einerseits und dem Mobilfunknetz andererseits dar.

Die Vorrichtung ermöglicht demjenigen, der über das Mobilfunknetz eine Verbindung zur Vorrichtung hergestellt hat, mit seinem Funktelefon die Funktionen einer realen Nebenstelle einer ortsfesten Telefonanlage zu simulieren. Für die Telefonanlage erscheinen Sprach- und Tastatureingaben am Funktelefon wie entsprechende Eingaben an einer herkömmlichen Nebenstelle, obwohl sich das Funktelefon beliebig weit von der Telefonanlage und von der Vorrichtung entfernt befinden kann. Die Telefonanlage vermag nicht, zwischen Eingaben an einer herkömmlichen Nebenstelle und Eingaben am Funktelefon zu unterscheiden.

Vorteilhaft kann die Vorrichtung beispielsweise von einem Außendienstmitarbeiter genutzt werden, der mit seinem Handy die Vorrichtung anruft und von dort aus ohne zusätzliche Gebühren in das Telefonsystem seiner Firma einsteigt, um Rücksprache mit Arbeitskollegen zu halten. Dabei fallen lediglich die Gebühren für die Mobilfunkverbindung zwischen dem Handy und der Vorrichtung an, ohne daß Gebühren für den Übergang in das Festnetz entstehen. Die Vorrichtung kann weiterhin bei bestehender Mobilverbindung zur Nachwahl einer Amtsverbindung, für welche lediglich das Festnetz beansprucht wird, genutzt werden. Diese Amtsverbindung wird, ferngesteuert durch das Funktelefon, von der ortsfesten Telefonanlage aufgebaut. Dabei entstehen lediglich die bei Ortsverbindungen geringen Kosten, die zu den Kosten der Mobilfunkverbindung hinzukommen, wobei die Kosten für den Übergang zwischen den Netzen entfallen. Je nach Tarifsituation kann dies eine erhebliche Gebührenersparnis bedeuten.

Zum Umsetzen einer Telekommunikations-Mobilfunkverbindung in ein Telefon-Festnetz wird der Sprachkanal des Handys mit dem Sprachkanal der angeschlossenen Telefonanlage verbunden, so daß über Sprach- oder Wähleingaben am Handy direkt auf die Telefonanlage zugegriffen werden kann. Ein von außerhalb über das Mobilfunknetz ankommender Anruf wird von der Vorrichtung mit Hilfe einer Anruferkennungseinheit erkannt. Die Steuereinheit gibt dann den Befehl, die Verbindung aufzubauen. Die Sende- und Empfangseinheit der Vorrichtung empfängt die von einem Funktelefon gesendeten Daten und trennt diese automatisch in Signalisierungs- und Steuerinformation einerseits sowie in Sprachinformation andererseits auf. Die Signalisierungs- und Steuerinformation wird der Steuereinheit über ein Signalisierungskanal zugeführt und beispielsweise auf deren Remote-Control-(RC) Eingang gegeben. Damit wird der Steuereinheit signalisiert, daß nunmehr eine Verbindung über das Mobilfunknetz aufgebaut ist, welche in das Festnetz umgesetzt werden soll. Die Steuereinheit steuert eine Gabelschaltung, die das Abnehmen des Telefonhörers schaltungstechnisch simuliert. Bei aktivierter Gabelschaltung wird die Vorrichtung daher von der Telefonanlage, als deren Nebenstelle sie im Anwendungsfall angeschlossen ist, wie eine herkömmliche Nebenstelle behandelt, bei welcher der Telefonhörer abgenommen ist. Die Telefonanlage sendet dann beispielsweise die üblichen Nebenstellen-Erkennungssignale an die Vorrichtung.

Die Sprachinformation wird von der Sende- und Empfangseinheit in einem Sprachkanal auf die Gabelschaltung gegeben, wobei der Sprachkanal durch Aktivieren der Gabelschaltung über die Nebenstellen-Schnittstelle der Vorrichtung mit dem Sprachkanal der Telefonanlage gekoppelt wird. Damit kann der Handy-Benutzer mittels frequenzcodierter Tastatursignale oder auch mittels Sprache direkt auf die Telefonanlage zugreifen. Tastatureingaben am Handy werden mehrfrequenzcodiert über das Mobilfunknetz übertragen und von der Sende- und Empfangseinheit dem Sprachkanal zugeführt. Sie gelangen bei aktivierter Gabelschaltung in den Sprachkanal der Telefonanlage und werden von dieser automatisch als Wähllinformation bzw. -befehl erkannt und ausgewertet.

Hat der Handy-Benutzer die Nummer einer weiteren Nebenstelle der Telefonanlage gewählt, so stellt die Telefonanlage daher die Verbindung zwischen der Nebenstelle, an welcher die erfindungsgemäße Vorrichtung angeschlossen ist bzw. welche die Vorrichtung im Anwendungsfall darstellt und der angewählten Nebenstelle her bzw. ruft diese Nebenstelle an. Hat der Handy-Benutzer hingegen eine Amtskennziffer mit anschließender Rufnummer gewählt, so versucht die Telefonanlage, eine Verbindung über das terrestrische Netz mit dem angewählten Teilnehmer herzustellen. Nach Wahl der Amtskennziffer hört der Handy-Benutzer das Freizeichen, das von der Telefonanlage ausgegeben wird. Weiterhin hört er nach Wahl der Rufnummer das übliche Klingelzeichen, bis der angerufene Teilnehmer abnimmt.

Auch wenn die nachgewählte Verbindung noch nicht aufgebaut ist, ist der Anruf für den Mobilfunkbenutzer gebührenpflichtig, da bereits die Verbindung mit der Vorrichtung über das Mobilfunknetz besteht. Kommt die nachgewählte Verbindung zustande, so fallen nur die zusätzlichen terretrischen Gebühren an, die dem Inhaber der Telefonanlage berechnet werden.

Das Umsetzen einer Mobilfunkverbindung in ein Telefonfestnetz geschieht also durch Ineinanderschachteln zweier Telekommunikationsverbindungen von denen eine eine Mobilfunkverbindung und die andere eine Festnetzverbindung ist. Die erfindungsgemäße Vorrichtung fungiert dabei als private Vermittlungsstelle. Sie muß vom Benutzer eines Funktelefons angerufen werden und bietet diesen dann die Möglichkeit, in das Festnetz einzusteigen. Die Gabelschaltung, die den Sprachkanal des Funktelefons mit dem Sprachkanal der ortsfesten Telefonanlage koppelt, spielt bei der Vermittlung eine zentrale Rolle.

Um einen Mißbrauch der Vorrichtung zu verhindern, ist in vorteilhafter Fortbildung der Erfindung die Abfrage eines Zugangscodes (PIN) vorgesehen. Die Aktivierung der Gabelschaltung durch die Steuereinheit ist an die korrekte Eingabe dieses Zugangscodes, beispielsweise PIN, gebunden. Der Code wird am Funktelefon an der Tastatur eingegeben, von der Sende- und Empfangseinheit empfangen und dem Sprachkanal zugeführt. An den Sprachkanal ist ein MFV-Empfänger angeschlossen, der mehrfrequenz-codierte Signale erkennt, in digitale Form umwandelt und der Steuereinheit in digitaler Form zuführt. Die Steuereinheit vergleicht nun den eingegebenen Erkennungscode mit einem oder einer Mehrzahl vorbestimmter Ziffern- oder auch Zeichenkombinationen. Bei korrekter Eingabe des Codes aktiviert die Steuereinheit die Gabelschaltung. Die Zugriffskontrolle kann auch zweistufig sein, z.B. ähnlich wie beim Zugriff auf Datenverarbeitungsanlagen durch Eingabe eines login und passwords.

Vorzugsweise fordert die Vorrichtung dem Benutzer des Funktelefons zur Eingabe des Zugangscodes auf, indem die Steuereinheit das Senden einer entsprechenden Nachricht mittels der Sende- und Empfangseinheit an das Funktelefon veranlaßt, welche als Ansage wiedergegeben oder auf dem Display des Funktelefons dargestellt wird.

Vorteilhaft ist es, wenn die Berechtigung des Handy-Benutzers nur dann kontrolliert wird, wenn dieser im Begriff ist, Kosten für den Inhaber der Vorrichtung bzw. der Telefonanlage verursachen, insbesondere also, wenn er eine Amtskennziffer bzw. ein Kurzwahlziel, das eine Amtskennziffer enthält, anwählt. Damit kann sich der Handy-Benutzer schnell innerhalb der Telefonanlage bewegen und wird erst beim Zugriff auf die Amtsleitung kontrolliert. Da somit in vielen Fällen auf eine Zugangskontrolle verzichtet wird, können Mobilfunkkosten gespart werden. Eine Möglichkeit, dies technisch zu realisieren, ist gegeben, wenn die Gabelschaltung sofort bei Herstellung der Mobilfunkverbindung durch die Steuereinheit aktiviert wird, wobei die Steuereinheit die am Funktelefon eingegebenen Nachwählbefehle kontinuierlich überwacht. Diese Nachwahlbefehle werden wie der PIN-Code dem Sprachkanal der Vorrichtung mittels des Mehrfrequenzempfängers entnommen in ein digitales Signal umgewandelt und der Steuereinheit zugeführt. Falls die Steuereinheit in diesem Signal eine Amtskennziffer ausmacht, deaktiviert sie sofort die Gabelschaltung, so daß weitere Eingaben am Funktelefon die Telefonanlage nicht erreichen. Die Gabelschaltung wird erst wieder aktiviert, nachdem der korrekte Zugangscode am Funktelefon eingegeben wurde. Vorzugsweise fordert die Vorrichtung den Handy-Benutzer dazu auf.

Es ist weiterhin vorteilhaft, wenn die Steuereinheit in diesem Fall die eingegebene Rufnummer, die nur mit Zugangsberechtigung anwählbar ist, zwischenspeichert und nach Code-Eingabe selbsttätig die Nachwahl vornimmt. Diese kann vom Handy-Benutzer freigegeben oder bestätigt werden.

Da Amtskennziffern und Kurzwahlziele je nach Telefonanlage unterschiedlich sein können, ist vorgesehen, die die Code-Abfrage auslösenden Ziffern- oder Ziffernfolgen der Vorrichtung einzuprogrammieren. Ebenso können Kurzwahlziele, welche meist mit einer Steuertaste beginnen, gezielt abgeblockt und nur nach Code-Eingabe zugelassen werden.

Wurde nach Herstellung einer Mobilfunkverbindung am Funktelefon keine Rufnummer nachgewählt, so unterbricht die Vorrichtung, ggf. nach Aufforderung zur Nachwahl an den Handy-Benutzer, die Mobilfunkverbindung eigenständig. Ebenso wird die Mobilfunkverbindung von der Vorrichtung abgebrochen, wenn nach einer vorbestimmten Anzahl von Versuchen kein korrekter Zugangscode eingegeben wurde.

Nach Herstellung der Nachwahlverbindung werden die beiden ineinandergeschachtelten Verbindungen abgebaut, wenn einer der Endteilnehmer auflegt. Die Steuereinheit ist imstande, die Eingabe eines Steuerbefehls zum Abbruch der Verbindung am Funktelefon zu erkennen, und deaktiviert bei Empfang dieses Befehls die Gabelschaltung. Damit wird auch die Festnetzverbindung abgebaut. Legt umgekehrt der Festnetzteilnehmer auf, so erscheint für die Nebenstelle, d.h. für die Vorrichtung, ein Besetzt-Ton, der von der Steuereinheit ausgewertet wird. Diese deaktiviert wiederum die Gabelschaltung und leitet den Abbau der Mobilfunkverbindung ein. Vor Abbau der Mobilfunkverbindung kann eine Anfrage an den Handy-Benutzer gesendet werden, ob er weitere Festnetzverbindungen wünscht.

Kurzbeschreibung der Zeichnung, in der zeigen:
- Figur 1: ein Blockdiagramm einer erfindungsgemäßen Vorrichtung, welche im Anwendungsfall an einem Nebenstellenanschluß einer Telefonanlage angeschlossen ist,
- Figur 2: eine erfindungsgemäße Vorrichtung im Verbund mit einer Festnetztelefonanlage, einem weiteren Festnetztelefonanschluß sowie einem Mobiltelefon im Anwendungsfall.

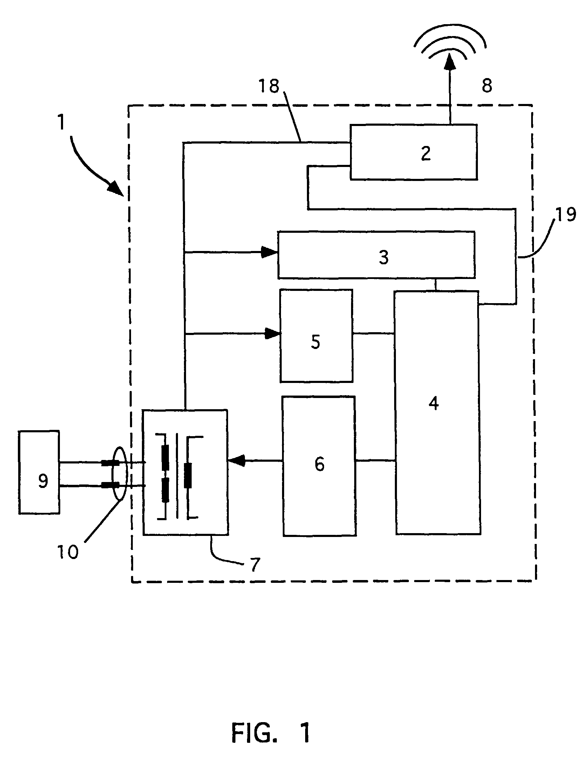

In Figur 1 ist der prinzipielle Aufbau einer erfindungsgemäßen Vorrichtung 1 gezeigt. Die Vorrichtung weist eine Sende- und Empfangseinheit 2 auf, über welche mit Hilfe einer Antenne 8 Mobilfunkverbindungen über das Mobilfunknetz aufgebaut werden können. Diese Sende- und Empfangseinheit 2 ist ein Baustein, wie er auch in handelsüblichen Funktelefonen Anwendung findet. Zum Betrieb ist eine Funktelefonkarte, z.B. für das D1- oder D2-Netz, notwendig. Mit der dieser Karte zugeordneten Telefonnummer kann die Vorrichtung 1 über das Mobilfunknetz angerufen werden. Die Telefonnummer ist daher eine andere als die der Telefonfestnetz-Anlage, an welche die Vorrichtung im Anwendungsfalle als Nebenstelle angeschlossen ist.

Die Vorrichtung weist weiterhin eine Schnittstelle 10 zum Anschluß an einen Nebenstellenanschluß 9 einer Telefonfestnetzanlage auf. Hier ist nur schematisch der Nebenstellenanschluß 9 dargestellt. Die Schnittstelle 10 ist eine analoge a/b-Schnittstelle, kann jedoch auch eine digitale So-Schnittstelle für ISDN-Anschlüsse sein. Auch die Realisierung anderer analoger oder digitaler Schnittstellen ist möglich. Die Vorrichtung hat daher für die Telefonanlage, an welche sie im Anwedungsfall angeschlossen ist, den Rang einer gewöhnlichen Nebenstelle.

Als Nebenstelle ist der erfindungsgemäßen Vorrichtung 1 innerhalb der Telefonfestnetzanlage eine gesonderte Nebenstellenkennziffer zugeordnet. Die Verbindung mit der Telefonfestnetzanlage über den Nebenstellenanschluß 9 und die Schnittstelle 10 erfolgt durch Aktivieren der Gabelschaltung 7. Dies entspricht dem Abnehmen des Hörers an einem Endgerät einer gewöhnlichen Nebenstelle.

Die Gabelschaltung 7 ist bei der erfindungsgemäßen Vorrichtung 1 durch eine Steuereinheit 4 aktivierbar und deaktivierbar. Die Steuereinheit 4 ist beispielsweise ein Mikro-Controller. Das Signal zur Aktivierung der Gabelschaltung erhält die Steuereinheit 4 von der Sende- und Empfangseinheit 2. Die Sende- und Empfangseinheit trennt die über das Mobilfunknetz empfangenen Daten in Sprach- sowie Signalisierungs- und Steuerinformation auf. Dazu weist die Sende- und Empfangseinheit 2 eine Schnittstelle auf, an welcher diese beiden Kanäle getrennt abgegriffen werden können. Eine Anrufererkennung 3 erkennt, daß von einem entfernten Benutzer über das Mobilfunknetz eine Verbindung angefragt wird und veranlaßt die Sende- und Empfangseinheit 2 über die Steuereinheit 4 zur Herstellung der Verbindung mit dem Anrufer. Die über den Signalisierungskanal 19 der Steuereinheit 4 zugeführte Steuerinformation dient dazu, der Steuereinheit 4 die Herstellung der Verbindung anzuzeigen. Die Steuereinheit 4 kann dann die Aktivierung der Gabelschaltung 7 veranlassen.

Neben der Signalisierungs- und Steuerinformation empfängt die Sende- und Empfangseinheit 2 hauptsächlich Sprachinformation, welche durch direkte Spracheingabe am Funktelefon oder durch Tastatureingaben und deren Umwandlung in ein mehrfrequenzcodiertes Signal entstehen. Diese Informationen werden dem Sprachkanal 18 zugeführt. Der Sprachkanal 18 wird nunmehr nicht direkt in einen Telefonhörer geleitet, wie bei einem herkömmlichen Funktelefon, sondern auf die Gabelschaltung gegeben. Bei aktivierter Gabelschaltung 7 werden die über den Sprachkanal 18 übermittelten Informationen direkt der Telefonanlage zugeführt. Der Sprachkanal der Telefonanlage wird somit durch die Gabelschaltung 7 mit dem Sprachkanal der erfindungsgemäßen Vorrichtung 1 gekoppelt. Der Benutzer eines Funktelefons kann dieses nunmehr wie eine gewöhnliche Nebenstelle der Telefonanlage verwenden.

Um unberechtigten Zugriff auf die Telefonanlage zu verhindern, ist eine Zugangscode-Abfrage vorgesehen, welche mit Hilfe des MehrfrequenzEmpfängers 5 sowie der Steuereinheit 4 realisiert wird. Ein an der Tastatur des Funktelefons eingegebener Zugangscode gelangt als mehrfrequenz-codiertes Signal in den Sprachkanal 18 der Vorrichtung 1 und wird aus diesem vom Mehrfrequenz-Empfänger 5 entnommen. Dieser wandelt die akustischen Signale in ein digitales Signal um, wobei eine bestimmte Frequenz des Signals jeweils einer Ziffer entspricht. Die so bestimmte Ziffernfolge wird der Steuereinheit 4 zugeführt, welche sie mit vorbestimmten Ziffernfolgen vergleicht und bei Übereinstimmung die Gabelschaltung 7 aktiviert.

Findet die Code-Abfrage direkt bei Herstellung einer Mobilfunkverbindung statt, so kann der MFV-Empfänger 5 nach der Code-Abfrage deaktiviert werden, sobald die Gabelschaltung 7 aktiv ist. Andererseits ist es vorteilhaft, die Gabelschaltung 7 direkt bei Herstellung einer Mobilfunkverbindung automatisch zu aktivieren und erst eine Code-Abfragung durchzuführen, wenn tatsächlich eine Nachwahlverbindung über die Amtsleitung angefordert wird. Dazu muß der MFV-Empfänger 5 kontinuierlich aktiv sein und den Sprachkanal 18 überwachen. Mehrfrequenzcodierte Signale, d.h. Signale, die nicht Sprach-, sondern Tastatureingaben am Funktelefon entsprechen, übermittelt er in digitaler Form an die Steuereinheit 4, welche sie daraufhin untersucht, ob eine Amtskennziffer gewählt wurde. Erkennt die Steuereinrichtung 4 eine derartige Ziffer, so deaktiviert sie sofort die Gabelschaltung 7, so daß die Telefonanlage nicht mit dem Aufbau einer derartigen Verbindung beginnt. Es wird nun zur Eingabe des Zugangscodes aufgefordert. Wurde diese korrekt durchgeführt, so aktiviert die Steuereinheit 4 die Gabelschaltung erneut, und auch auf Amtsverbindungen kann zugegriffen werden. Die Code-Abfrage in dieser Form hat den Vorteil, daß der Anrufer am Funktelefon zunächst unmittelbar und zeitsparend auf sämtliche Nebenstellenanschlüsse der Telefonanlage zurückgreifen kann, ohne daß dafür eine Code-Eingabe notwendig ist.

Zwischen Steuereinheit 4 und Gabelschaltung 7 ist eine Einheit zur Leistungsverstärkung und Potentialtrennung 6 geschaltet. Diese dient dazu, die Vorrichtung 1 versorgungstechnisch von der Telefonanlage zu trennen.

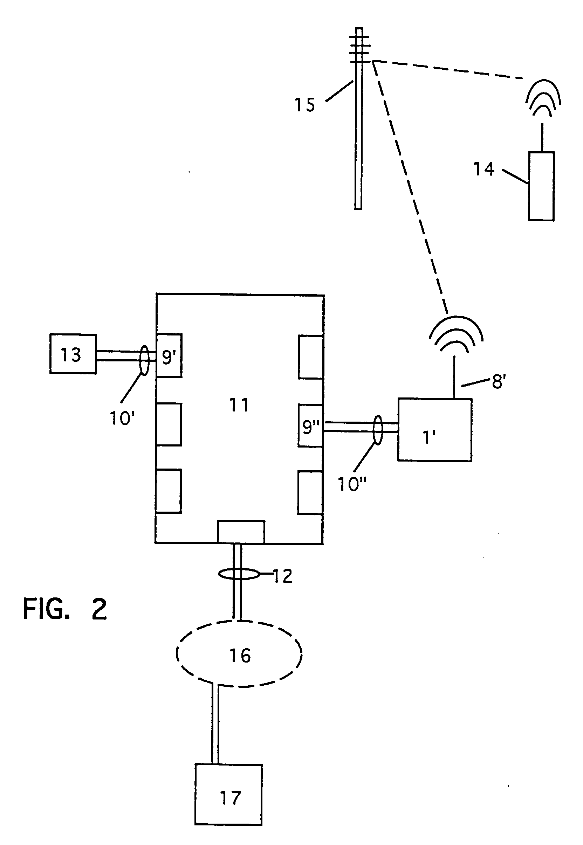

In Figur 2 ist eine erfindungsgemäße Vorrichtung 1' im Anwendungsfall gezeigt. Sie ist an den Nebenstellenanschluß 9" einer Telefonanlage 11 des Festnetzes 16 angeschlossen. Der Anschluß erfolgt wie bei einer herkömmlichen Nebenstelle 13 über eine Schnittstelle 10' bzw. 10". Beispielhaft ist daher eine herkömmliche Nebenstelle 13 gezeigt, die hier an den Nebenstellenanschluß 9' der Telefonanlage 11 angeschlossen. Sie ist ein beliebiges Endgerät, z.B. ein Telefon oder ein Faxgerät. Der Anschluß der erfindungsgemäßen Vorrichtung 1' macht keinerlei Modifikationen an der Telefonanlage 11 selbst notwendig. Für die Telefonanlage 11 besteht kein Unterschied zwischen dem Nebenstellenanschluß 9' und dem Nebenstellenanschluß 9". Weitere Nebenstellenanschlüsse sind angedeutet.

Die Telefonanlage 11 ist über die Amtsleitung 12 mit dem Telefonfestnetz 16 verbunden. Schematisch ist ein weiterer Teilnehmer am Festnetz mit einer weiteren Festnetz-Telefonanlage 17 angedeutet.

Als Nebenstelle der Telefonanlage 11 ist die Vorrichtung 1' daher in der Lage, Festnetzverbindungen zu weiteren Nebenstellen, z.B. zur Nebenstelle 13, oder über die Amtsleitung 12 zu weiteren externen Festnetzteilnehmern 17 aufzubauen. Andererseits ist die Vorrichtung 1' auch in der Lage, als Teilnehmer am Mobilfunknetz, hier angedeutet durch die Antenne 8', Mobilfunkverbindungen zu anderen Funktelefonen 14 aufzubauen.

Im Anwendungsfall ruft der Benutzer eines Funktelefons 14, der eine Nebenstelle der Telefonanlage 11 oder einen Teilnehmer im der Telefonanlage 11 zugeordneten Ortsnetz erreichen möchte, die Vorrichtung 1' an, welche in diesem Fall ebenfalls als Funktelefon fungiert. Über den Funkumsetzer 15 wird eine Mobilfunkverbindung zwischen dem Handy 14 und der Vorrichtung 1' hergestellt. Die Tarifierung ist dabei unabhängig davon, wie weit das Funktelefon 14 von der Vorrichtung 1' entfernt ist. Direkt bei Herstellung der Mobilfunkverbindung bzw. nach Eingabe des Zugangscodes wird die Gabelschaltung der Vorrichtung 1' und damit die Nebenstellenfunktion des Gerätes aktiviert. Sprachkanal des Handys und Sprachkanal der Telefonanlage 11 werden über den Sprachkanal 18 der Vorrichtung miteinander gekoppelt. Die Telefonanlage sendet den Nebenstellen-Erkennungston, der über Funk zum Funktelefon 14 übertragen wird, und wartet auf Wählbefehle. Dabei akzeptiert sie neben Tastatureingaben wie an herkömmlichen Nebenstellen, z.B. der Nebenstelle 13, im Impulswahlverfahren auch mehrfrequenzcodierte Signale, welche bestimmten Ziffern entsprechen. Tastatureingaben am Funktelefon 14 werden mehrfrequenzcodiert über Funk übertragen, von der Vorrichtung 1' dem Sprachkanal der Telefonanlage 11 zugeführt und von dieser verwertet. Dabei ist die Telefonanlage 11 außerstande zu entscheiden, wo diese Signale erzeugt wurden. Sie werden so behandelt, als kämen sie von einer herkömmlichen Nebenstelle.

Wählt daher der Teilnehmer am Funktelefon 14 einen weiteren Nebenstellenanschluß an, so stellt die Telefonanlage die Verbindung zu diesem Nebenstellenanschluß her bzw. läßt dort ein Klingelzeichen ertönen. Dieses Klingelzeichen wird gleichermaßen auch am Funktelefon 14 ausgegeben. Wählt der Benutzer am Funktelefon 14 eine Amtskennziffer mit anschließender Rufnummer, so leitet die Telefonanlage 11 auch diesen Verbindungsaufbau ein. Der Benutzer am Funktelefon 14 hört die entsprechenden akustischen Signale, z.B. Besetzt-Ton, Freizeichen, Klingelzeichen. Nichtsdestotrotz fallen in diesem Zustand Gebühren an, schon bevor eine Verbindung zum Gesprächspartner hergestellt ist.

Nimmt der angerufene Teilnehmer an der Nebenstelle bzw. an einem weiteren Festnetzanschluß 17 ab, so ist auch die Nachwahlverbindung hergestellt. Es liegen somit zwei ineinander geschachtelte Kommunikationsverbindungen vor, von denen eine ausschließlich im Mobilfunknetz und die andere ausschließlich im Festnetz besteht. Die Vorrichtung 1' übernimmt dabei die Rolle der Vermittlungsstelle.

Die Verwendung der Erfindung hat insbesondere dann Kostenvorteile, wenn der anzurufende Festnetzteilnehmer eine Nebenstelle der Telefonanlage 11 ist oder sich im zur Telefonanlage F gehörigen Ortsnetz befindet. Es entfallen dadurch in jedem Fall die Kosten für den Übergang vom Mobilfunknetz in das Festnetz, die normalerweise von den jeweiligen Netzbetreibern erhoben werden.

### Gewerbliche Anwendbarkeit:

Die Erfindung ist insbesondere für Mobilfunkverbindungen über das Mobilfunknetz geeignet, die auf das Telefonfestnetz geleitet werden sollen bzw. bei denen eine Nummer des Telefonfestnetzes erreicht werden soll. In vorteilhafter Weise können durch die Erfindung Gebührenunterschiede bei der Tarifierung der unterschiedlichen Verbindungstypen wirtschaftlich nutzbar gemacht sowie eine Möglichkeit zum preisgünstigeren Telefonieren zur Verfügung gestellt werden.

### Liste der Bezugszeichen:

- 1: Vorrichtung zum Umsetzen einer Telekommunikations-Mobilfunkverbindung in ein Telefon-Festnetz
- 2: Sende-/Empfangseinheit
- 3: Anruferkennung
- 4: Steuereinheit
- 5: Mehrfrequenz (MFV)-Empfänger
- 6: Verstärkerstufe + Potentialtrennung
- 7: Gabelschaltung
- 8, 8': Antenne
- 9, 9', 9": Nebenstellenanschluß einer Telefonanlage
- 10, 10': Schnittstelle für Nebenstelle (analog/digital)
- 11, 17: Festnetz-Telefonanlage
- 12: Ausschnittstelle
- 13: Nebenstelle, z.B. Telefon, Fax ...
- 14: Funktelefon
- 15: Funkumsetzer
- 16: terrestrisches Telefonnetz
- 18: Sprachkanal
- 19: Signalisierungskanal

## Patentansprüche

1. Vorrichtung (1, 1') zum Umsetzen einer Telekommunikations-Mobilfunkverbindung in ein Telefon-Festnetz (16), mit folgenden Merkmalen:
a) eine Sende- und Empfangseinheit (2) zur Herstellung einer Mobilfunkverbindung mit einem Funktelefon (14) über ein Mobilfunknetz, wobei die Vorrichtung (1, 1') durch die Sende- und Empfangseinheit (2) Teilnehmer am Mobilfunknetz ist;
b) eine Festnetz-Schnittstelle (10, 10') zum Anschluß an einen Nebenstellenanschluß (9, 9', 9") einer Telefonanlage (11), wobei über die Festnetz-Schnittstelle (10, 10') eine Festnetz-Verbindung zu einer weiteren Nebenstelle (13) der Telefonanlage (11) oder über die Amtsleitung zu einer weiteren Festnetz-Telefonanlage (17) herstellbar ist,
c) wobei ein Anruf, der aus dem Mobilfunknetz an der Sende- und Empfangseinheit (2) ankommt, einer Steuereinheit (4) signalisiert wird, die eine Gabelschaltung (7) aktiviert, welche die Vorrichtung für den ankommenden Anruf transparent schaltet, wobei die von der Sende- und Empfangseinheit (2) empfangene Sprachinformation über die Festnetz-Schnittstelle (10, 10') dem Sprachkanal der Telefonanlage (11) zugeführt wird.

2. Vorrichtung nach Anspruch 1, dadurch gekennzeichnet,
daß die von der Sende- und Empfangseinheit (2) empfangenen Daten automatisch in Signalisierungs- und Steuerinformation sowie in Sprachinformation aufgetrennt werden, wobei die Signalisierungs- und Steuerinformation der Steuereinheit (4) über einen Signalisierungskanal (19) zugeführt wird und die Sprachinformation in einem Sprachkanal (18) auf die Gabelschaltung (7) gegeben, der nach Aktivieren der Gabelschaltung (7) über die Nebenstellen-Schnittstelle (10, 10') mit dem Sprachkanal der Telefonanlage (11) gekoppelt wird.

3. Vorrichtung nach Anspruch 1 oder 2, dadurch gekennzeichnet,
daß zwischen Steuereinheit (4) und Gabelschaltung (7) eine Einheit zur Leistungsverstärkung und Potentialtrennung (6) geschaltet ist.

4. Vorrichtung nach einem der Ansprüche 1 bis 3, dadurch gekennzeichnet,
daß die Aktivierung der Gabelschaltung (7) durch die Steuereinheit (4) an die korrekte Eingabe eines Zugangscodes (PIN) gebunden ist, welcher am Funktelefon (14) eingegeben und von einem Mehrfrequenz-Empfänger (5) dem Sprachkanal (18) entnommen und der Steuereinheit (4) in digitaler Form zugeführt wird.

5. Vorrichtung nach Anspruch 4, dadurch gekennzeichnet,
daß die Abfrage eines Zugangscodes bei Herstellung der Mobilfunkverbindung vor der Aktivierung der Gabelschaltung (7) erfolgt, indem eine entsprechende Aufforderung an das Funktelefon gesendet wird.

6. Vorrichtung nach Anspruch 4 oder 5, dadurch gekennzeichnet,
daß die Zugriffskontrolle zweistufig ist, zum Beispiel durch Eingabe eines login und passwords.

7. Vorrichtung nach Anspruch 4, dadurch gekennzeichnet,
daß die Gabelschaltung (7) mit Herstellung der Mobilfunkverbindung aktiviert wird, wobei die Steuereinheit (4) die Nachwahlbefehle, die am Funktelefon (14) eingegeben, von dem Mehrfrequenz-Empfänger (5) dem Sprachkanal (18) entnommen und der Steuereinheit (4) in digitaler Form zugeführt werden, überwacht und die Gabelschaltung (7) deaktiviert, falls eine Amtskennziffer erkannt wurde, und die Gabelschaltung (7) dann nur durch Eingabe eines Zugangscodes wieder aktivierbar ist.

8. Vorrichtung nach einem der vorangegangenen Ansprüche,
dadurch gekennzeichnet,
daß die Steuereinheit (4) die Eingabe eines Steuerbefehls zum Abbruch der Verbindung am Funktelefon (14) zu erkennen imstande ist und bei Empfang dieses Befehls die Gabelschaltung (7) deaktiviert.

9. Verfahren zum Umsetzen einer Telekommunikations-Mobilfunkverbindung in ein Telefon-Festnetz (16), wobei
a) von einem Funktelefon (14) über das Mobilfunknetz eine Vorrichtung (1, 1'), die eine Sende- und Empfangseinheit (2) aufweist, angewählt und eine Mobilfunkverbindung hergestellt wird, wobei die Vorrichtung (1, 1') durch die Sende- und Empfangseinheit (2) Teilnehmer am Mobilfunknetz ist
b) die Vorrichtung (1, 1') als Nebenstelle an eine Festnetz-Telefonanlage (11) angeschlossen ist,
c) durch Aktivierung einer Gabelschaltung (7) der Vorrichtung (1, 1') der Sprachkanal (18) der Vorrichtung mit dem Sprachkanal der Festnetz-Telefonanlage (11) verbunden wird,
d1) ausgehend von der Telefonanlage (11), eine Festnetz-Telefonverbindung durch Nachwahl einer Amtskennziffer und der einem Festnetz-Teilnehmer (17) entsprechenden Rufnummer bzw. eines Kurzwahlcodes am Funktelefon (14) hergestellt wird
oder
d2) innerhalb der Telefonanlage (11) eine Festnetz-Telefonverbindung durch Nachwahl der einer weiteren Nebenstelle (13) entsprechenden Rufnummer am Funktelefon (14) hergestellt wird.

10. Verfahren nach Anspruch 9, dadurch gekennzeichnet,
daß die Aktivierung der Gabelschaltung (7) an die korrekte Eingabe eines Zugangscodes (PIN) am Funktelefon (14) gebunden ist, welcher von einem Mehrfrequenz-Empfänger (5) dem Sprachkanal (18) der Vorrichtung (1, 1') entnommen und einer Steuereinheit (4) in digitaler Form zugeführt wird, die die Gabelschaltung (7) steuert.

11. Verfahren nach Anspruch 10, dadurch gekennzeichnet,
daß der Zugangscode bei Herstellung der Mobilfunkverbindung abgefragt wird, bevor die Aktivierung der Gabelschaltung (7) erfolgt, indem eine entsprechende Aufforderung von der Vorrichtung (1, 1') an das Funktelefon (14) gesendet wird.

12. Verfahren nach Anspruch 10, dadurch gekennzeichnet,
daß der Zugangscode erst abgefragt wird, falls am Funktelefon (14) eine Amtskennziffer bzw. ein entsprechender Kurzwahlcode eingegeben wird, wobei der Sprachkanal der Vorrichtung kontinuierlich derartige Eingaben betreffend überwacht wird und die die Gabelschaltung deaktiviert sowie die Zugangscodeabfrage veranlaßt wird, falls eine solche Eingabe erkannt wurde.

13. Verfahren nach einem der Ansprüche 9 bis 12, dadurch gekennzeichnet,
daß die Festnetzverbindung seitens des Funktelefons (14) durch Eingabe eines Steuerbefehls und seitens des angewählten Festnetz-Anschlusses in gewohnter Weise, z.B. durch Auflegen des Telefonhörers, beendet wird, wobei durch die Eingabe des Steuerbefehls die Gabelschaltung (7) deaktiviert wird.
